# FASCICULE DE BREVET EUROPEEN

(11) **EP 3 229 348 B1**
(45) Date de publication et mention de la délivrance du brevet: **21.10.2020**
(21) Numéro de dépôt: 17164677.1
(22) Date de dépôt: 04.04.2017
(51) Int. Cl.: H02K 1/27

(54) **ROTOR POUR MACHINE ÉLECTRIQUE TOURNANTE**
ROTOR FÜR EINE ELEKTRISCHE MASCHINE
ROTOR FOR AN ELECTRICAL MACHINE

(30) Priorité: 04.04.2016 FR 1652911
(43) Date de publication de la demande: 11.10.2017
(73) Titulaire: VALEO EQUIPEMENTS ELECTRIQUES MOTEUR, 94046 Créteil Cedex (FR)
(72) Inventeur: BETTAYEB, M. Adel, 94046 CRETEIL CEDEX (FR)
(74) Mandataire: Duprez, Richard

(56) Documents cités:
- EP-A1- 2 264 860
- CN-A- 102 790 458
- DE-A1-102012 205 191
- DE-A1-102013 206 416
- DE-A1-102013 209 344
- US-A1- 2002 175 583
- US-A1- 2013 127 280
- US-A1- 2013 270 958
- US-A1- 2014 265 702

## Description

### DOMAINE TECHNIQUE DE L'INVENTION

La présente invention porte sur un rotor pour une machine électrique tournante et sur une machine électrique tournante comprenant un tel rotor.

### ARRIERE PLAN TECHNOLOGIQUE

De manière connue, les machines électriques tournantes comportent deux parties coaxiales à savoir un rotor et un stator entourant le corps du rotor (Cf. US2002/175583, EP2264860, US2003/127280, CN102790458, DE102012205191)

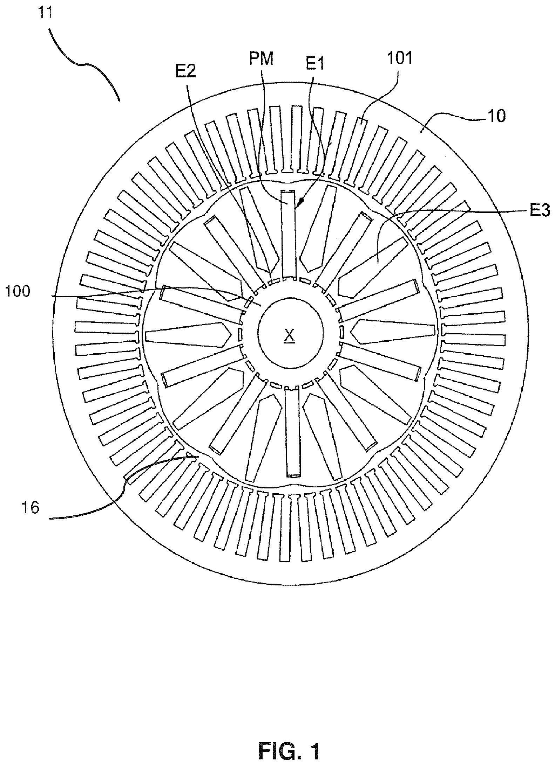

La figure 1 montre la structure d'une machine électrique tournante défluxable selon l'état de la technique. La machine 11 est de type à aimants enterrés et à concentration de flux et comprend un stator 10 et un rotor 100. Une réalisation concrète d'une telle machine est par exemple un moteur de traction de 8 à 10 KW pour des applications dans des véhicules automobiles du type dits «mild-hybrid». Une forme de réalisation particulière de ce moteur comprend un stator 10 ayant 60 encoches 101 et un rotor 100 comportant 10 pôles Nord et Sud alternés. Le rotor 100 a un diamètre de l'ordre 100 mm et une longueur axiale de l'ordre de 50 mm. Le rotor 100 comporte 10 aimants permanents PM ayant une forme sensiblement rectangulaire et pour dimensions : longueur (Lm) x hauteur (ha) x largeur (la) 50 mm x 25 mm x 5 mm.

Le stator 10 et le rotor 100 sont réalisés avec des paquets de tôles métalliques formant des masses magnétiques. Les encoches 101 du stator 10 sont prévues pour recevoir des bobinages statoriques (non représentés) et forment entre elles une pluralité de dents statoriques. Les encoches 101 seront ainsi prévues pour loger des bobinages concentrés, bobinés sur des grosses dents, ou bien des bobinages distribués. Le rotor 100 a la forme générale d'un cylindre multilobé, chacun des lobes correspondant à un pôle magnétique du rotor. On définit un entrefer 16 entre le stator 10 et le rotor 100.

Les aimants PM sont disposés de manière radiale. Les aimants PM sont de préférence des aimants permanents comprenant des terres rares tels que des aimants de type Néodyme-Fer-Bore (NeFeB), Samarium-Fer (SmFe), Samarium-Cobalt (SmCo) ou bien des aimants obtenus à partir de ferrites frittés ou liés. Le corps du rotor 100 est muni d'un axe X et comprend un alésage central débouchant à ses deux extrémités faciales et destiné à recevoir un arbre d'entraînement. On notera que dans la présente invention l'arbre d'entraînement pourra être réalisé dans un matériau magnétique ou amagnétique selon l'application envisagée.

Le rotor 100 comprend également des évidements E1, E2 et E3 qui se répètent pour chaque pôle et s'étendent axialement sur sensiblement toute la longueur du rotor.

Des tôles de fermeture, sans les évidements E1, E2 et E3, sont éventuellement prévues aux extrémités faciales du rotor 100 afin de contribuer à l'assemblage du rotor 100. Des points de soudure (non représentés) à la périphérie du paquet de tôles et des tirants traversants (non représentés), parallèles à l'axe central, sont également prévus pour l'assemblage du rotor 100.

Les tirants traversants sont réalisés dans un matériau magnétique ou amagnétique, selon les applications. Avantageusement, le passage des tirants à travers le paquet de tôles du rotor 100 pourra se faire à travers les évidements E3. Dans cette forme de réalisation particulière, les évidements E1, E2 et E3 sont chacun au nombre de 10, ce nombre correspondant au nombre N=10 de pôles magnétiques du rotor 100.

Il est connu d'utiliser la machine 11 en mode alternateur ou en mode moteur. En mode moteur, on injecte dans les bobinages statoriques une intensité Iphi qui est la résultante de composantes d'intensité Id et Iq qui sont en quadrature. On définit un angle de couple qui correspond à l'angle entre l'intensité Iphi et la composante Iq.

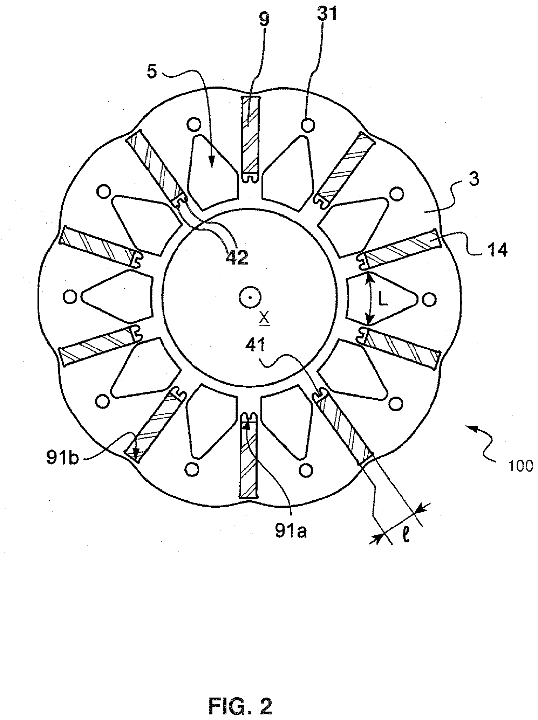

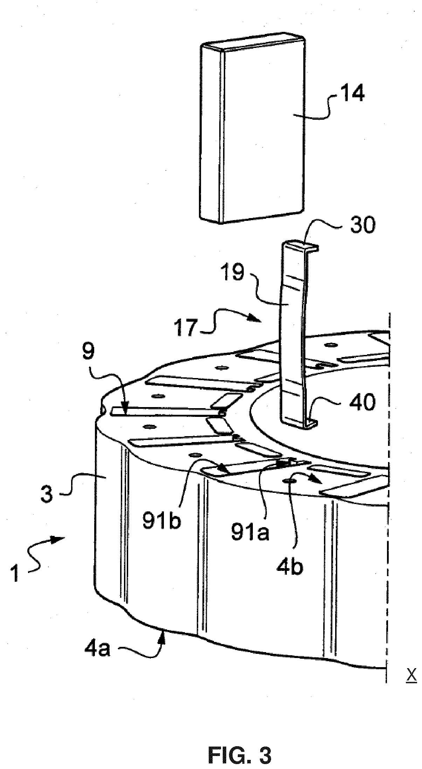

La figure 2 montre un rotor 100 selon l'état de la technique, d'axe X, ayant un corps 3 fixé à un moyeu central (non représenté) cannelé à sa périphérie interne pour fixation en rotation sur un arbre. Le corps 3 comporte des logements 9 destinés à recevoir des aimants permanents 14 maintenus radialement et axialement à l'aide de dispositifs de maintien 17 visibles sur la figure 3 exerçant par déformation un effort radial sur l'aimant 14 ainsi que sur une partie axiale intérieure 91a du logement 9.

Le rotor 100 est formé par un empilement de tôles s'étendant dans un plan radial perpendiculaire à l'axe X. Le paquet de tôles forme le corps 3 du rotor 100 et est en matière ferromagnétique. Les tôles du corps 3 sont préférentiellement maintenues au moyen de rivets traversant axialement le rotor 100 de part en part via des ouvertures 31.

Des évidements 5 sont ménagés dans le corps 3. Selon un mode de réalisation préféré, ces évidements 5 présentent, une forme issue de la combinaison d'une forme en triangle et d'une forme en trapèze. Le triangle présente un côté commun avec le grand côté du trapèze. Les évidements 5 permettent de bien canaliser le flux magnétique.

Les logements 9 du corps 3 sont préférentiellement de forme sensiblement parallélépipédique destinés à recevoir les aimants permanents 14. Ces logements 9 espacés régulièrement sur la circonférence du rotor et situés dans le corps 3 du rotor 100, présentent une direction longitudinale d'extension parallèle à l'axe X et une direction d'extension s'étendant sensiblement radialement par rapport à l'axe X. Les logements 9, formés dans le corps 3, sont ici préférentiellement et de section globalement rectangulaire.

Le logement 9 suit une section perpendiculaire à l'axe X et peut être traversant. Alternativement, les logements 9 peuvent être fermés l'une de leurs extrémités axiales.

Les logements 9 sont délimités radialement par la partie axiale intérieure 91a déjà mentionnée et une partie axiale extérieure 91b. Les faces des parties 91b et 91a sont respectivement orientées radialement vers l'axe X du rotor 100 et côté opposé à l'axe X du rotor 100.

Autrement dit, la partie axiale 91a interne est tournée vers l'extérieur du rotor 100. Tandis que la partie axiale 91b est tournée vers l'intérieur du rotor 100. L'extérieur du rotor 100 est formé par la paroi radiale du rotor 100 est la partie du rotor 100 la plus éloignée de l'axe X et l'intérieur du rotor 100 est la partie du rotor 100 qui est relativement la plus proche du centre du rotor 100 et de l'axe X.

Les logements 9 sont destinés à recevoir chacun des éléments sous la forme d'un aimant 14. Les aimants 14 peuvent être en terre rare par exemple à base de Samarium-Cobalt (SmCo) ou à base de Néodymium- Fer- Bore (NdFeB) ayant une haute coercivité et un taux élevé de rémanence ainsi qu'une bonne tenue en température. Ils peuvent également être en ferrite.

En variante on peut loger dans des logements 9 des aimants 14 en terre rare et dans d'autres logements 9 des ferrites, dont le nombre pourra être égal ou inférieur au nombre d'aimants en terre rare. Ainsi on peut utiliser des aimants en terre rare coûteux pour s'approcher au mieux par exemple d'une puissance électrique souhaitée de la machine et compléter cela par des aimants en ferrite moins coûteux. En outre dans certains des logements 9 on peut remplacer au moins l'un des aimants par un élément amagnétique, par exemple en Aluminium, de même forme pour obtenir la puissance désirée de la machine électrique.

Comme montré sur la figure 2, la partie axiale intérieure 91a du logement 9 comprend deux portions concaves 42 et une portion saillante 41 s'étendant axialement suivant l'axe X. La portion saillante 41 est à plus grande proximité de la face 15 de l'aimant que les deux portions concaves 42. Les évidements 5 sont ménagés dans le corps 3 et positionnées entre les logements 9 sur une trajectoire reliant successivement les portions saillantes 41 des logements 9 consécutifs, préférentiellement suivant une section coupant perpendiculairement l'axe X du rotor 100. Les évidements 5 s'étendent suivant une longueur L. Sur la figure 2 est également représentée une largeur I du logement 9.

Sur la figure 3 est représenté le corps 3 du rotor 100 comprenant un axe X et muni de deux faces d'extrémités axiales 4a et 4b. Le corps du rotor 3 comprend les logements 9 délimités par les parties 91a et 91b. On peut également voir un dispositif de maintien 17 de l'aimant 14 dont une partie centrale 19 exerce par déformation un effort radial sur l'aimant 14 ainsi que sur une partie axiale intérieure 91a du logement 9. Le dispositif de maintien 17 comprend des rabats 30 et 40 permettant la retenue du dispositif de maintien 17 par contact sur les faces d'extrémités axiales 4b et 4a respectivement. Les aimants 14 ont une bonne tenue à la force centrifuge grâce au dispositif de 17 qui rattrape les jeux dus aux tolérances de fabrication des logements 9 et des aimants 14.

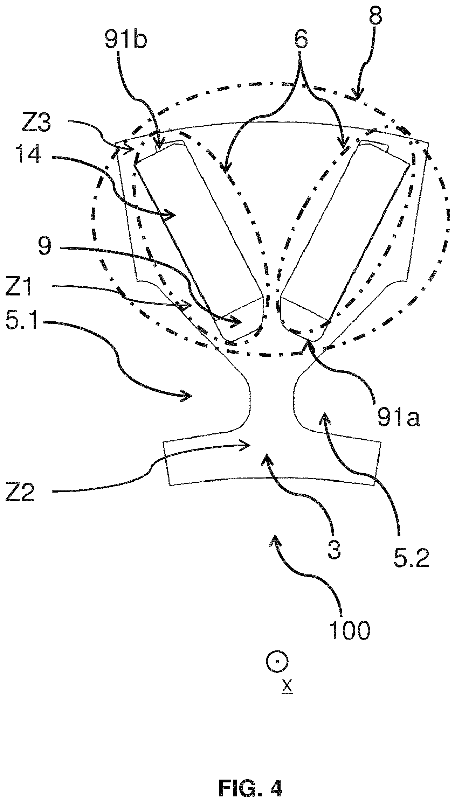

La figure 4 illustre un rotor 100 selon l'état de la technique. Il est représenté en section selon un plan perpendiculaire à l'axe X. Le rotor 100 comprend un corps de rotor 3 d'axe X. Le corps de rotor 3 comprend des évidements 5.1 et 5.2 et des logements 9.

Chacun des logements 9 est délimité par une partie axiale interne 91a et une partie axiale externe 91b référencées sur la figure 4. Chacun des logements 9 accueillent un aimant 14 respectivement.

Les aimants 14 sont ainsi enterrés dans le corps de rotor 3. Le groupe d'aimants de deux logements 9 adjacents forment un V muni de deux branches 6. Le groupe d'aimants du V forme un pôle magnétique 8 du rotor 100.

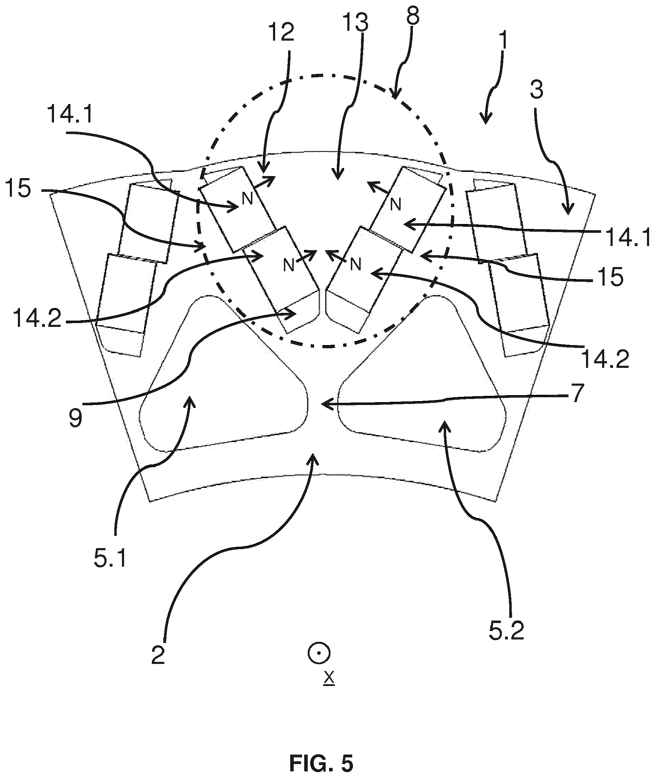

Le rotor 100 comprend d'autres pôles magnétiques 8 qui sont alternés sur le pourtour du rotor. Ces pôles sont destinés à interagir avec le stator 10 de ladite machine électrique tournante 11. Par ailleurs, on définit en référence à la figure 4, 3 zones du corps de rotor Z1, Z2 et Z3. Selon le rotor 100 de la figure 5, il est prévu des aimants 14 de taille : 6x20x44 mm³.

Cette machine donne satisfaction néanmoins il peut être souhaitable d'améliorer encore celle-ci. Tout d'abord, les aimants utilisés comprennent souvent des terres rares et leur coût est très important. De plus, la tenue en centrifugation de ces aimants est exigeante. D'autre part, les fuites en bout d'aimant peuvent être importantes, cela est dû notamment à l'entrefer. Egalement, ces machines peuvent présenter une ondulation de couple. Ces ondulations de couple peuvent affecter le rendement de la machine électrique.

Il existe donc un besoin pour une machine muni d'un rotor à aimants permanents ayant un coût maitrisé et un rendement amélioré.

### OBJET DE L'INVENTION

L'invention a pour objet de répondre à ce souhait tout en remédiant à au moins un de ces inconvénients précités.

Il est proposé un rotor pour machine électrique, le rotor étant défini par la combinaison de caractéristiques de la revendication 1.

Selon une caractéristique générale de l'invention, chaque branche dudit V comprend au moins deux aimants.

Il est ainsi possible d'utiliser plusieurs aimants de taille réduite dont le coût cumulé est diminué par rapport à un unique aimant.

Selon l'invention, les au moins deux aimants se superposent sur une partie de leurs faces latérales et sont décalés selon une direction perpendiculaire à ladite longueur. On réduit ainsi l'ondulation de couple. De plus, du fait du décalage des lignes de champs les niveaux de variation de champs sont réduits, ce qui permet de diminuer les pertes par courant de Foucault dans les aimants. On peut ainsi, pour notamment un même comportement en mode moteur de la machine électrique tournante, réduire la quantité d'aimant, par exemple de 10%.

Selon un mode de réalisation non couvert par la présente invention, la branche est segmentée selon un plan comprenant sa longueur de sorte à former une série de segments longitudinaux, les au moins deux aimants ont chacun la forme d'un des segments longitudinaux de ladite série.

Selon un mode de réalisation non couvert par la présente invention, les au moins deux aimants se superposent sur une partie de leurs faces longitudinales et sont décalés entre eux selon la longueur de la branche.

Selon l'invention, la branche est segmentée selon un plan perpendiculaire à sa longueur de sorte à former une série de segments perpendiculaires, les au moins deux aimants ont chacun la forme d'un des segments perpendiculaires de ladite série. On obtient ainsi des aimants compacts et plus solides
- Selon l'invention, les aimants ont une direction de polarisation perpendiculaire à la longueur de la branche. Ainsi le décalage suivant une direction perpendiculaire à la direction la longueur ne crée pas d'entrefer. Ce qui permet de limiter les pertes de flux. Par exemple, la direction de polarisation se situe dans le plan perpendiculaire à l'axe X.

Selon d'autres caractéristiques prise isolément ou en combinaison :
- les au moins deux aimants se superposent sur une partie de leurs faces latérales et sont décalés entre eux selon une direction perpendiculaire à la longueur de la branche et située dans un plan perpendiculaire à l'axe X. Il s'agit d'un mode de réalisation facile à mettre en œuvre en adaptant la forme des logements. Du fait du fractionnement des aimants, on peut répartir les efforts centrifuges sur l'ensemble des parois du logement et éviter un point de rupture situé par exemple sur la paroi du logement la plus proche de l'entrefer. Cela permet notamment de réduire la bande de matière entre la paroi axiale externe du logement et l'entrefer, ce qui réduit les pertes de flux.
- pour chaque branche l'aimant radialement extérieur est décalé vers l'extérieur du V. Ainsi, du fait de ce décalage, on peut rapprocher l'aimant du stator et de l'entrefer pour réduire les pertes de flux.
- les aimants d'une branche sont de même taille. Le procédé d'industrialisation est simplifié.
- le rotor comprend pour chacun de ses pôles magnétiques deux évidements, le corps de rotor comprenant un pont défini entre les deux évidements et reliant ledit pôle à une partie annulaire du corps du rotor entourant l'axe X. Cela permet une saturation du pont ce qui permet de limiter le passage de flux vers l'axe. En effet, ce flux est perdu pour le fonctionnement de la machine et en le limitant on diminue les pertes de flux. Plus généralement ces évidements permettent de réduire le poids du corps de rotor afin de diminuer l'inertie de la machine électrique tournante.
- les deux branches du V forment un angle inférieur à 90°.
- les au moins deux aimants d'une branche ont des caractéristiques magnétiques différentes. Il est possible de prévoir que seul l'aimant radialement extérieur ou proche de l'entrefer a une composition qui lui permet de résister hautement à la démagnétisation. Ainsi, on obtient une résistance globale à la démagnétisation de l'ensemble du rotor satisfaisante sans utiliser des composants terre rare chère pour l'ensemble des aimants permanents. Dans ce cas, on peut par exemple prévoir que l'aimant radialement extérieur est à base de Samarium-Cobalt (SmCo) ou de Néodymium- Fer- Bore (NdFeB) pour avoir une haute coercivité et que les autres aimants sont des aimants ferrites ou Alnico.

L'invention a également pour objet une machine électrique tournante qui comprend un rotor tel que décrit ci dessus comprenant entre 8 et 12 paires de pôles et un stator comprenant entre 26 et 34 encoches entourant ledit rotor. Il s'agit alors d'une machine électrique tournante optimisée qui permet un bon rendement.

### BREVE DESCRIPTION DES FIGURES

L'invention sera mieux comprise à la lecture de la description qui suit et à l'examen des figures qui l'accompagnent. Ces figures ne sont données qu'à titre illustratif mais nullement limitatif de l'invention.
La figure 1 montre, de manière simplifiée, la structure d'une machine électrique tournante à aimants permanents selon l'état de la technique ;
la figure 2 montre une vue de dessus d'un exemple de réalisation d'un rotor à aimants permanents à concentration de flux selon l'état de la technique ;
la figure 3 montre une vue en perspective de l'exemple de réalisation du rotor représenté sur la figure précédente ;
la figure 4 montre un autre rotor selon l'état de la technique ;
les figures 5 et 6 montrent un rotor selon un mode de réalisation non couvert par l'invention ;
les figures 7 et 8 montrent des dispositions des aimants pour le rotor selon d'autre modes de réalisation non couverts par l'invention ;
la figure 9 montre une disposition d'aimants pour le rotor selon la présente invention et
les figures 10 et 11 montrent le couple de la machine comprenant un rotor selon un mode de réalisation de l'invention ; et
les figures 12 et 13 montrent l'ondulation de couple de la machine comprenant un rotor selon un mode de réalisation de l'invention.

Les éléments identiques, similaires, ou analogues conservent la même référence d'une figure à l'autre.

### DESCRIPTION D'EXEMPLES DE REALISATION DE L'INVENTION

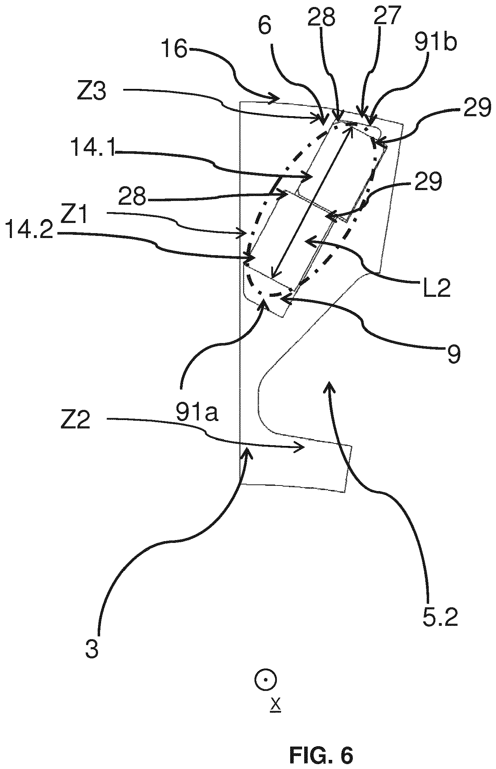

Les figures 5 et 6 illustrent un rotor 1.

Selon un mode de réalisation d'une machine électrique tournante 11, ce rotor 1 est représenté en section selon un plan perpendiculaire à l'axe X. Il est par exemple apte à fonctionner avec le stator 10 de la figure 1, en lieu et place du rotor 100 illustré sur la figure 1. Selon un autre mode un mode de réalisation d'une machine électrique tournante 11, on peut prévoir que le rotor 1 fonctionne avec un stator comprenant entre 26 et 34 encoches, par exemple 30 encoches.

Le rotor 1 comprend un corps de rotor 3 d'axe X. Le corps de rotor 3 comprend des évidements 5.1 et 5.2 et des logements 9.

Chacun des logements 9 est délimité par une partie axiale interne 91a et une partie axiale externe 91b référencées sur la figure 6. Chacun des logements 9 accueillent des aimants 14.1, 14.2. Selon le mode de réalisation illustré sur les figures 5 et 6, il est prévu pour chacun des logements deux aimants 14.1 et 14.2. On pourrait bien entendu prévoir un plus grand nombre d'aimants. Par exemple, les aimants 14.1, 14.2 d'une branche 6 sont de même taille. On peut également prévoir que tous les aimants du rotor 1 sont de même taille.

Les aimants 14.1 et 14.2 sont ainsi enterrés dans le corps de rotor 3. Le groupe d'aimants 14.1, 14.2 de deux logements 9 adjacents forment un V muni de deux branches 6 dont une est référencée sur la figure 6. Le V délimite une partie interne 13 entre les deux branches du V et une partie externe 15 complémentaire. Par exemple les deux branches du V contenant la partie interne 13 forment un angle inférieure à 90°, par exemple 56°. Par exemple, les branches du V sont désaxés par rapport au rayon du rotor 1.

Le groupe d'aimants 14.1, 14.2 du V forme un pôle magnétique 8 du rotor 1. Le rotor 1 comprend d'autres pôles magnétiques 8 qui sont alternés sur le pourtour du rotor. Ces pôles sont destinés à interagir avec le stator 10 de ladite machine électrique tournante 11. Selon un mode de réalisation, le rotor comprend entre 8 et 12 paires de pôles. Selon un exemple de ce mode de réalisation, le rotor comprend 10 paires de pôles.

En d'autres termes, sur la figure 5 est notamment représenté un pôle magnétique 8 comprenant 4 aimants 14.1, 14.2 enterrés dans le corps de rotor 3, ces 4 aimants formant un V. Par exemple, on peut prévoir que tous les aimants 14.1-14.2 du pôle magnétique 8 sont de même taille.

Comme on peut le voir sur la figure 5, le corps du rotor comprend en outre une partie annulaire 2 entourant l'axe X. Pour chaque pôle, les deux évidements 5.1, 5.2 du corps de rotor définissent alors un pont 7 qui relie ledit pôle 8 à ladite partie annulaire 2.

On peut prévoir que pour chaque branche, les deux aimants 14.1, 14.2 sont décalés selon une longueur L2 de la branche 6 ou une direction perpendiculaire à ladite longueur L2. La longueur L2 d'une branche 6 est définie comme la distance entre les deux faces les plus éloignées des aimants selon un plan perpendiculaire à l'axe X et s'étend par exemple selon la direction des faces longitudinales du logement 9 accueillant les aimants de la branche. Toutefois, la longueur L2 est dans un plan perpendiculaire à l'axe X.

Par exemple, la forme du logement 9 comprend au moins deux parallélépipède rectangle qui sont parallèles entre eux. Dans ce cas, lesdites faces longitudinales sont celles qui sont alignées avec une direction d'extension préférentielle du parallélépipède rectangle formant le logement 9. Ainsi, les parois des au moins deux parallélépipèdes rectangles sont parallèles.

Par exemple, pour chaque branche, chaque aimant 14.1, 14.2 de la pluralité d'aimants de chaque branche 6 présente une forme de parallélépipède rectangle ayant des faces longitudinales alignées avec les faces longitudinales du logement 9 et des faces latérales perpendiculaires à la direction L2 tout en comprenant l'axe X.

Comme illustré sur les figures 5 et 6, la branche 6 est segmentée selon un plan perpendiculaire à la longueur L2 de sorte à former une série de segments perpendiculaires. Les au moins deux aimants 14.1, 14.2 ont alors chacun la forme d'un des segments perpendiculaires de ladite série. Par exemple à chacun des segments de la série correspond un unique aimant 14.1, 14.2.

Dans ce cas, comme illustré sur les figures 5 et 6, on peut prévoir que les aimants de chaque branche, sont superposés les uns sur les autres suivant une partie de leurs faces latérales pour obtenir une puissance maximale de la machine. Les aimants 14.1, 14.2 ainsi empilés forment alors un empilement d'éléments magnétiques ayant par exemple, une forme complémentaire de celle des logements 9.

Comme illustré sur les figures 5 et 6, on peut prévoir que les au moins deux aimants 14.1, 14.2 sont décalés entre eux selon une direction perpendiculaire à la longueur L2 de la branche 6, ladite direction de décalage étant de plus située dans un plan perpendiculaire à l'axe X.

Dans ce cas, bien que les aimants puissent présenter des faces latérales de même taille, pour un aimant donné sa face latérale ne recouvre pas totalement la face de l'aimant sur lequel il est empilé. En effet, les aimants sont décalés, si bien que la face latérale de l'aimant est également décalée par rapport à la face de l'aimant sur lequel il est empilé.

Comme illustré sur les figures 5 et 6, on peut prévoir que pour chaque branche 6 l'aimant 14.1 radialement extérieur, c'est à dire l'aimant le plus proche de la partie axiale externe 91 b par rapport à l'axe X, est décalé vers la partie externe 15 du V. En d'autres termes, l'aimant 14.1 radialement extérieur est décalé vers l'extérieur du V.

On peut prévoir que les aimants 14.1, 14.2 du pôle magnétique ont une direction de polarisation 12 perpendiculaire à la longueur de la branche L2. Par exemple, cette direction de polarisation 12 est située dans un plan perpendiculaire à l'axe X.

On peut également prévoir que le dispositif de maintien 17 de l'état de la technique illustré sur la figure 3 est utilisé pour le maintien des aimants, un dispositif de maintien étant utilisé pour chaque branche.

La figure 6 illustre en outre une bande de matière 27 du corps de rotor 3 située entre la paroi axiale externe 91b et l'entrefer 16. Dans le rotor 1, il est possible de réduire cette bande de matière 27 nécessaire pour le maintien des aimants en centrifugation tout en conservant la même vitesse de rotation maximale du rotor 1. En effet, la bande de matière 27 ne va supporter que l'aimant 14.1 (qui ne représente qu'un demi aimant par rapport à l'aimant 14 du rotor 100 de la figure 4) et les aimants 14.1 et 14.2 sont également supportés par le fer notamment le coin 28 de l'aimant 14.2 et le coin 29 de l'aimant 14.2.

D'autre part, comme on peut le voir sur la figure 6, en déplaçant l'aimant 14.1 vers l'extérieur du V, la distance entre un coin 28 de l'aimant 14.1 et l'entrefer 16 augmente. On peut alors éloigner l'aimant 14.1 de l'axe X et le rapprocher de l'entrefer tout en conservant une bande de matière 27 permettant la tenue en centrifugation.

Ainsi, en rapprochant l'aimant et/ou réduisant la bande de matière on limite les pertes de flux.

On définit également en référence à la figure 6, les zones Z1, Z2 et Z3. On peut ainsi comparer les résultantes des contraintes mécaniques sur ces trois zones pour le rotor de l'état de la technique illustré à la figure 4 et celui illustré sur la figure 6.

Ainsi, pour une vitesse de rotation du rotor de l'état de la technique illustré en figure 4 égale à 8400 tr/min, on obtient des contraintes mécaniques de 205, 220 et 315 MPa au niveau Z1, Z2 et Z3 respectivement.

Tandis que pour une vitesse de rotation du rotor illustré à la figure 6 égale à 8400 tr/min, on obtient des contraintes mécaniques de 205, 215 et 325 MPa au niveau Z1, Z2 et Z3 respectivement.

On obtient des contraintes mécaniques sur ces trois zones qui sont globalement similaires à celle du rotor de l'état de la technique. C'est avantageux car la bande de matière 27 du rotor de l'état de la technique est d'une épaisseur globalement réduite.

Selon le rotor 1 de la figure 6, il est prévu par exemple, des aimants 14.1 et 14.2 de taille: 6x9x44 mm³ qui ont une induction rémanente Br comprise entre 1.2 et 1.3 Tesla. On constate ainsi que la quantité d'aimant est réduite par rapport à un unique aimant de 6x10x44 mm³ du rotor 100 illustré sur la figure 4.

Plus généralement, on peut prévoir un rotor 1 de la figure 6 présentant les caractéristiques suivantes :
- hauteur d'aimant (selon l'axe X) : 44mm ;
- longueur d'aimant (selon la longueur L2) : 9 mm, la longueur L2 représentant deux fois la longueur d'aimant quand il y a deux aimants par logement ;
- largeur d'aimant dans le plan perpendiculaire à l'axe X et selon une direction perpendiculaire à la longueur L2 : 6mm ;
- Ratio largeur aimant / longueur aimant : 0.6667 ;

Selon le mode de réalisation d'une machine électrique tournante 11 dans lequel le rotor 1 fonctionne avec un stator comprenant entre 26 et 34 encoches, par exemple 30 encoches, on peut prévoir les caractéristiques suivantes pour la machine électrique :
- Ratio entre le diamètre intérieur et le diamètre extérieur du stator : 0.7176 ;
- Ratio entre largeur de dent stator (selon une direction ortho radiale, dans un plan perpendiculaire à l'axe X) et hauteur de dent stator (selon le rayon du stator) : 0.3252 ;
- Ratio entre le diamètre extérieur du stator et le diamètre extérieur du rotor : 0.7144 ;
- Ratio entre le diamètre de l'arbre et le diamètre extérieur du rotor : 0.6333 ;
- Facteur de concentration de flux : 0.6452.

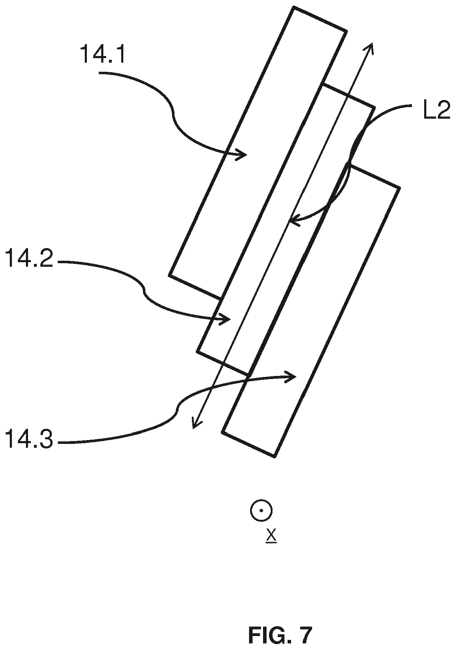

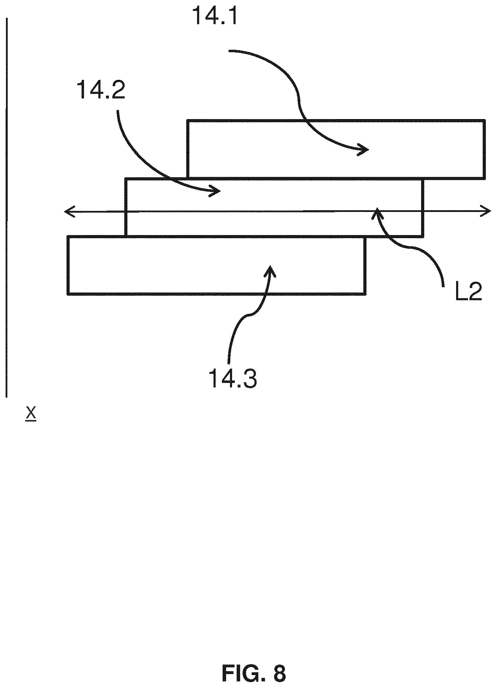

Les figures 7 et 8 illustrent un autre mode de réalisation non couvert par l'invention, selon lequel il est prévu que la branche 6 est segmentée selon un plan comprenant la longueur L2 de sorte à former une série de segments longitudinaux, les au moins deux aimants 14.1, 14.2 ont chacun la forme d'un des segments longitudinaux de ladite série. Par exemple à chacun des segments de la série correspond un unique aimant 14.1, 14.2. Les au moins deux aimants 14.1, 14.2 sont alors décalés entre eux selon la longueur L2 de la branche 6 et se superposent sur une partie de leurs faces longitudinales.

Plus précisément, dans la figure 7, les segments longitudinaux sont formés à partir de la segmentation de la branche 6 selon un plan comprenant la longueur L2 et l'axe X.

Tandis que dans la figure 8, les segments longitudinaux sont formés à partir de la segmentation de la branche 6 selon un plan perpendiculaire à l'axe X et comprenant la longueur L2.

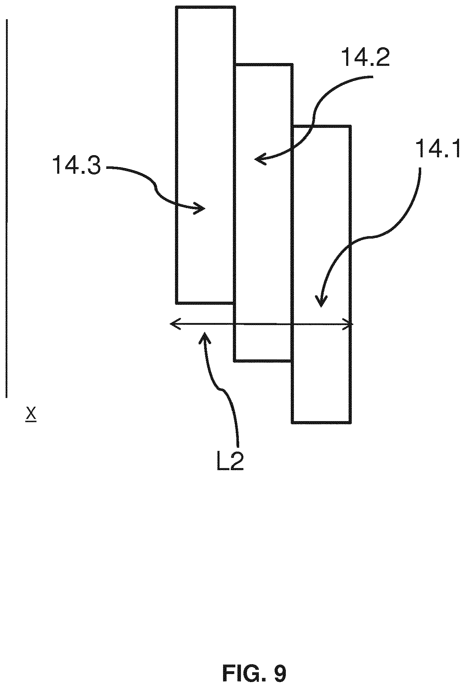

La figure 9 illustre un mode de réalisation de la présente invention. Tout comme les figures 5 et 6, la branche 6 est segmentée selon un plan perpendiculaire à la longueur L2 de sorte à former une série de segments perpendiculaires. Les au moins deux aimants 14.1, 14.2 ont chacun la forme d'un des segments perpendiculaires de ladite série. Par exemple à chacun des segments de la série correspond un unique aimant 14.1, 14.2. Les aimants 14.1, 14.2 sont alors décalés entre eux selon une direction perpendiculaire à la longueur L2 de la branche 6. Ainsi, les deux aimants 14.1, 14.2 se superposent en partie sur leurs faces latérales. Toutefois, le mode de réalisation de la figure 9 se distingue de celui illustré sur les figures 5 et 6 par le fait que les au moins deux aimants 14.1, 14.2 sont décalés entre eux selon l'axe X.

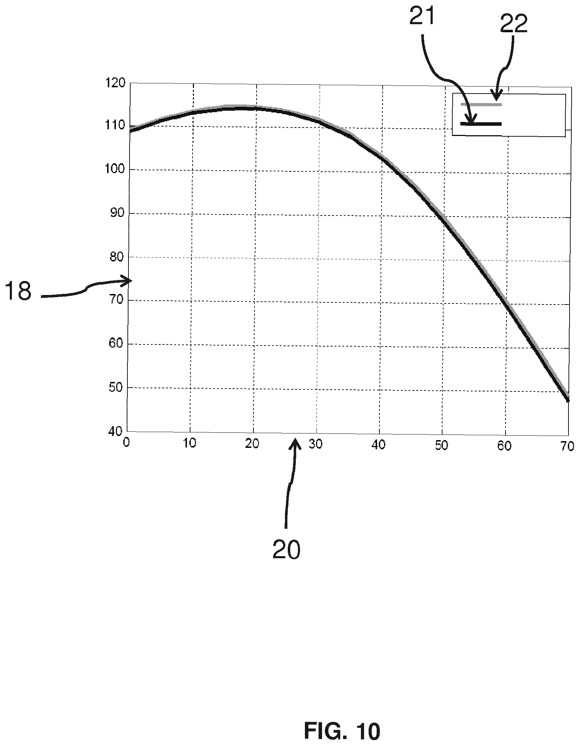

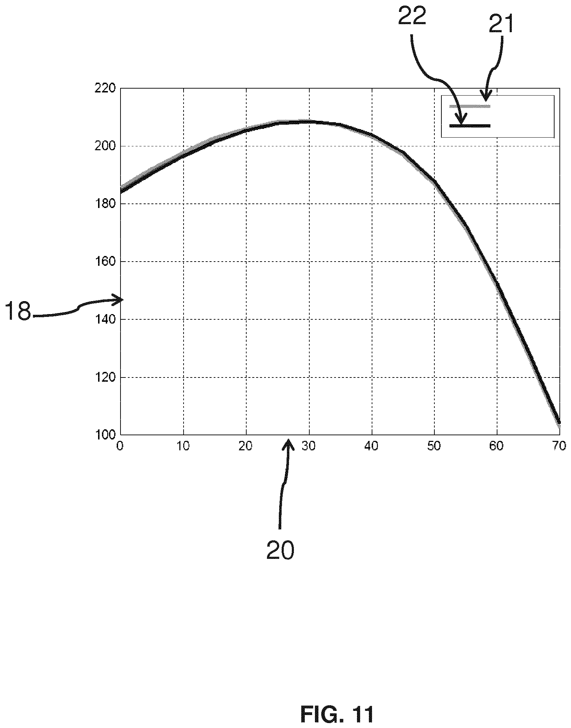

Les figures 10 et 11 montrent chacune deux courbes 21 et 22 de couple d'une machine électrique tournante. Ces deux courbes 21 et 22 sont représentées dans un repère orthonormé comprenant un axe des abscisses 20 et un axe des ordonnées 18. L'axe 20 représente l'angle de couple c'est à dire l'angle entre l'intensité Iphi injectée dans les bobinages statoriques et la composante Iq et est exprimé en degré. Tandis que l'axe 18 représente la valeur du couple développé par la machine fonctionnant en mode moteur et est exprimé en N.m.

La courbe 21 représente le couple développé par la machine 11 fonctionnant en mode moteur lorsqu'elle est munie du rotor 100 selon l'état de la technique illustré notamment sur la figure 4. La courbe 22 représente le couple développé par la machine 11 fonctionnant en mode moteur munie du rotor 1 selon l'invention. La figure 10 représente le couple lorsque la valeur efficace de Iphi vaut 220 A. La figure 11 représente le couple lorsque la valeur efficace de Iphi vaut 450 A.

On constate que les courbes 21 et 22 sont quasiment superposées tant pour la valeur Iphi efficace de 450 A ou 220 A. On en déduit que les valeurs de couple développé par la machine fonctionnant en mode moteur muni d'un rotor selon l'état de la technique ou d'un rotor selon l'invention sont sensiblement égales.

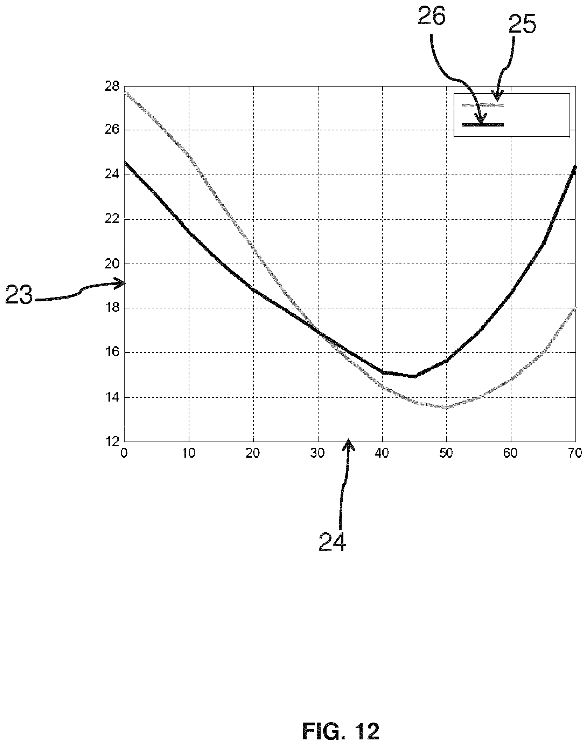

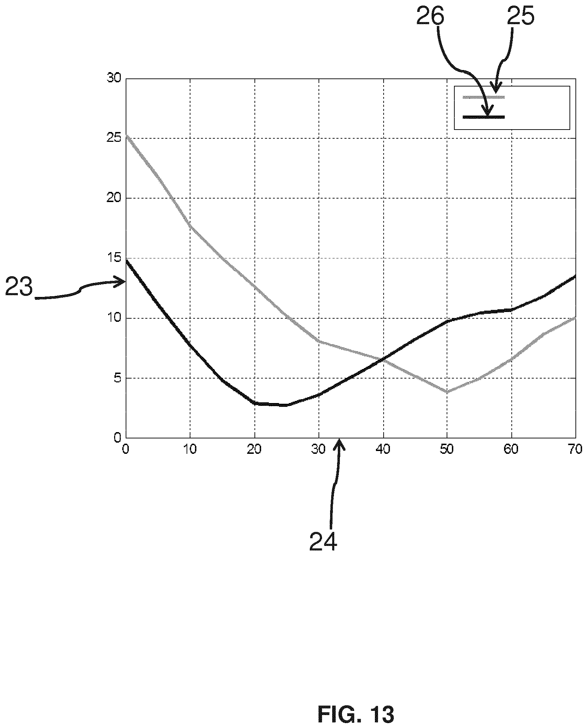

Les figures 12 et 13 montrent chacune deux courbes 25 et 26 d'ondulation du couple d'une machine électrique tournante. Ces deux courbes 25 et 26 sont représentées dans un repère orthonormé comprenant un axe des abscisses 24 et un axe des ordonnées 23. L'axe 24 représente l'angle de couple c'est à dire l'angle entre l'intensité Iphi injectée dans les bobinages statoriques et la composante Iq et est exprimé en degré. Tandis que l'axe 23 représente l'ondulation de couple de la machine fonctionnant en mode moteur et est exprimé en N.m. La courbe 25 représente l'ondulation de couple de la machine 11 fonctionnant en mode moteur muni d'un rotor 100 selon l'état de la technique illustré notamment sur la figure 4. La courbe 26 représente l'ondulation de couple de la machine 11 fonctionnant en mode moteur muni du rotor 1 selon l'invention. La figure 12 représente le couple lorsque la valeur efficace de Iphi vaut 220 A. La figure 13 représente le couple lorsque la valeur efficace de Iphi vaut 450 A.

On constate que la courbe 26 est sensiblement plus basse que la courber 25 pour un angle de couple compris entre 0 et 30° lorsque la valeur efficace de Iphi vaut 220 A et compris entre 0 et 40° lorsque la valeur efficace de Iphi vaut 450 A. On en déduit que pour ces gammes d'angles l'ondulation de couple est fortement réduite. Notamment, l'ondulation de couple est divisée par 4 lorsque l'angle de couple est de l'ordre de 20° lorsque la valeur efficace de Iphi vaut 450 A.

## Revendications

1. Rotor (1) pour machine électrique tournante (11), ledit rotor comprenant :
- un corps de rotor (3) muni d'un axe X ;
- des pôles magnétiques (8) destinés à interagir avec un stator (10) de ladite machine électrique tournante, chaque pôle magnétique (8) comprenant des aimants (14.1, 14.2),
lesdits aimants (14.1, 14.2) étant enterrés dans ledit corps de rotor (3) de telle sorte qu'ils forment en section selon un plan perpendiculaire à l'axe X un V pour chaque pôle (8) du rotor ;
chaque branche (6) dudit V comprenant au moins deux aimants (14.1, 14.2) et ayant une longueur (L2) dans un plan perpendiculaire à l'axe X,
lesdits aimants (14.1, 14.2) ayant une direction de polarisation (12) perpendiculaire à la longueur de la branche (L2),
la branche (6) étant segmentée selon un plan perpendiculaire à sa longueur (L2) de sorte à former une série de segments perpendiculaires, les au moins deux aimants (14.1, 14.2) rayant chacun la forme d'un des segments perpendiculaires de ladite série,
**caractérisé en ce que** les au moins deux aimants (14.1, 14.2) sont décalés entre eux selon une direction perpendiculaire à la longueur (L2) de la branche (6) de sorte que lesdits aimants se superposent sur une partie de leurs faces latérales, les faces latérales étant perpendiculaires à la longueur (L2) de la branche et comprenant l'axe X, et
les au moins deux aimants (14.1, 14.2) sont décalés entre eux selon l'axe X.

2. Rotor selon la revendication 1, **caractérisé en ce que** les au moins deux aimants (14.1, 14.2) se superposent sur une partie de leurs faces latérales et sont décalés entre eux selon une direction perpendiculaire à la longueur (L2) de la branche (6) et située dans un plan perpendiculaire à l'axe X.

3. Rotor selon la revendication 1 ou 2, **caractérisé en ce que** pour chaque branche (6) l'aimant (14.1) radialement extérieur est décalé vers l'extérieur du V.

4. Rotor selon l'une quelconque des revendications précédentes, **caractérisé en ce que** les aimants (14.1, 14.2) d'une branche (6) sont de même taille.

5. Rotor selon l'une quelconque des revendications précédentes, **caractérisé en ce que** le rotor comprend pour chacun de ses pôles magnétiques (8) deux évidements (5.1, 5.2), le corps (3) de rotor comprenant un pont (7) défini entre les deux évidements et reliant ledit pôle (8) à une partie annulaire (8) du corps (3) du rotor entourant l'axe X.

6. Rotor selon l'une quelconque des revendications précédentes, **caractérisé en ce que** les deux branches du V forment un angle inférieur à 90°.

7. Rotor selon l'une quelconque des revendications précédentes, **caractérisé en ce que** les au moins deux aimants (14.1 , 14.2) d'une branche (6) ont des caractéristiques magnétiques différentes.

8. Machine électrique tournante (11) **caractérisé en ce qu'**elle comprend un rotor (1) selon l'une des revendications précédentes comprenant entre 8 et 12 paires de pôles et un stator (10) comprenant entre 26 et 34 encoches entourant ledit rotor (1).

## Patentansprüche

1. Rotor (1) für eine drehende elektrische Maschine (11), wobei der Rotor umfasst:
- einen Rotorkörper (3), der mit einer Achse X versehen ist;
- Magnetpole (8), die dazu ausgelegt sind, mit einem Stator (10) der drehenden elektrischen Maschine zu interagieren, wobei jeder Magnetpol (8) Magnete (14.1, 14.2) umfasst,
wobei die Magnete (14.1, 14.2) in dem Rotorkörper (3) so vergraben sind, dass sie im Schnitt entlang einer senkrecht zur Achse X verlaufenden Ebene ein V für jeden Pol (8) des Rotors bilden;
wobei jeder Schenkel (6) des V mindestens zwei Magnete (14.1, 14.2) umfasst und in einer senkrecht zur Achse X verlaufenden Ebene eine Länge (L2) hat,
wobei die Magnete (14.1, 14.2) eine senkrecht zur Länge des Schenkels (L2) verlaufende Polarisationsrichtung (12) haben,
wobei der Schenkel (6) entlang einer senkrecht zu seiner Länge (L2) verlaufenden Ebene segmentiert ist, so dass eine Reihe von senkrechten Segmenten gebildet wird, wobei die mindestens zwei Magnete (14.1, 14.2) jeweils die Form eines der senkrechten Segmente der Serie haben,
**dadurch gekennzeichnet, dass** die mindestens zwei Magnete (14.1, 14.2) entlang einer senkrecht zur Länge (L2) des Schenkels (6) verlaufenden Ebene zueinander versetzt sind, so dass sich die Magnete über einen Teil ihrer Seitenflächen überlagern, wobei die Seitenflächen senkrecht zur Länge (L2) des Schenkels verlaufen und die Achse X umfassen, und
die mindestens zwei Magnete (14.1, 14.2) entlang der Achse X zueinander versetzt sind.

2. Rotor nach Anspruch 1, **dadurch gekennzeichnet, dass** sich die mindestens zwei Magnete (14.1, 14.2) über einen Teil ihrer Seitenflächen überlagern und entlang einer Richtung zueinander versetzt sind, die senkrecht zur Länge (L2) des Schenkels (6) verläuft und in einer senkrecht zur Achse X verlaufenden Ebene liegt.

3. Rotor nach Anspruch 1 oder 2, **dadurch gekennzeichnet, dass** bei jedem Schenkel (6) der radial äußere Magnet (14.1) nach außerhalb des V versetzt ist.

4. Rotor nach einem der vorhergehenden Ansprüche, **dadurch gekennzeichnet, dass** die Magnete (14.1, 14.2) eines Schenkel (6) gleich groß sind.

5. Rotor nach einem der vorhergehenden Ansprüche, **dadurch gekennzeichnet, dass** der Rotor für jeden seiner Magnetpole (8) zwei Ausnehmungen (5.1, 5.2) umfasst, wobei der Rotorkörper (3) eine Brücke (7) umfasst, die zwischen den beiden Ausnehmungen definiert ist und den Pol (8) mit einem ringförmigen Teil (8) des Körpers (3) des Rotors verbindet, der die Achse X umgibt.

6. Rotor nach einem der vorhergehenden Ansprüche, **dadurch gekennzeichnet, dass** die beiden Schenkel des V einen Winkel von weniger als 90° bilden.

7. Rotor nach einem der vorhergehenden Ansprüche, **dadurch gekennzeichnet, dass** die mindestens zwei Magnete (14.1, 14.2) eines Schenkel (6) unterschiedliche magnetische Eigenschaften haben.

8. Drehende elektrische Maschine (11), **dadurch gekennzeichnet, dass** sie einen Rotor (1) nach einem der vorhergehenden Ansprüche umfasst, der zwischen 8 und 12 Polpaare umfasst, und einen Stator (10), der zwischen 26 und 34 Nuten umfasst und den Rotor (1) umgibt.

## Claims

1. Rotor (1) for a rotary electric machine (11), said rotor comprising:
- a rotor body (3) provided with an X axis;
- magnetic poles (8) intended to interact with a stator (10) of said rotary electric machine, each magnetic pole (8) comprising magnets (14.1, 14.2), said magnets (14.1, 14.2) being buried in said rotor body (3) such that they form, in section along a plane perpendicular to the X axis, a V for each pole (8) of the rotor;
each branch (6) of said V comprising at least two magnets (14.1, 14.2) and having a length (L2) in a plane perpendicular to the X axis,
said magnets (14.1, 14.2) having a direction of polarization (12) perpendicular to the length of the branch (L2),
the branch (6) being segmented along a plane perpendicular to its length (L2) so as to form a series of perpendicular segments, the at least two magnets (14.1, 14.2) each having the shape of one of the perpendicular segments of said series,
**characterized in that** the at least two magnets (14.1, 14.2) are mutually offset along a direction perpendicular to the length (L2) of the branch (6) such that said magnets are superimposed over a portion of their lateral faces, the lateral faces being perpendicular to the length (L2) of the branch and comprising the X axis, and the at least two magnets (14.1, 14.2) are mutually offset along the X axis.

2. Rotor according to Claim 1, **characterized in that** the at least two magnets (14.1, 14.2) are superimposed over a portion of their lateral faces and are mutually offset along a direction that is perpendicular to the length (L2) of the branch (6) and is located in a plane perpendicular to the X axis.

3. Rotor according to Claim 1 or 2, **characterized in that**, for each branch (6), the radially outer magnet (14.1) is offset towards the outside of the V.

4. Rotor according to any one of the preceding claims, **characterized in that** the magnets (14.1, 14.2) of a branch (6) are of the same size.

5. Rotor according to any one of the preceding claims, **characterized in that** the rotor comprises, for each of its magnetic poles (8), two recesses (5.1, 5.2), the rotor body (3) comprising a bridge (7) defined between the two recesses and connecting said pole (8) to an annular portion (8) of the rotor body (3) surrounding the X axis.

6. Rotor according to any one of the preceding claims, **characterized in that** the two branches of the V form an angle of less than 90°.

7. Rotor according to any one of the preceding claims, **characterized in that** the at least two magnets (14.1, 14.2) of a branch (6) have different magnetic characteristics.

8. Rotary electric machine (11) **characterized in that** it comprises a rotor (1) according to one of the preceding claims comprising between 8 and 12 pairs of poles and a stator (10) comprising between 26 and 34 slots surrounding said rotor (1).
